# EUROPEAN PATENT SPECIFICATION

(11) **EP 4 206 895 B1**
(45) Date of publication and mention of the grant of the patent: **11.02.2026**
(21) Application number: 21885263.0
(22) Date of filing: 28.10.2021
(51) Int. Cl.: G06F 3/16, G06F 3/12, G10L 15/26, G06F 40/30

(54) **FOOD MATERIAL INFORMATION PRINTING METHOD, FOOD MATERIAL INFORMATION PRINTING SYSTEM, AND READABLE STORAGE MEDIUM**
VERFAHREN ZUM DRUCKEN VON LEBENSMITTELMATERIALINFORMATIONEN, SYSTEM ZUM DRUCKEN VON LEBENSMITTELMATERIALINFORMATIONEN UND LESBARES SPEICHERMEDIUM
PROCÉDÉ D'IMPRESSION D'INFORMATIONS DE MATIÈRES ALIMENTAIRES, SYSTÈME D'IMPRESSION D'INFORMATIONS DE MATIÈRES ALIMENTAIRES ET SUPPORT D'ENREGISTREMENT LISIBLE

(30) Priority: 30.10.2020 CN 202011197025
(43) Date of publication of application: 05.07.2023
(73) Proprietor: Qingdao Haier Refrigerator Co., Ltd, Qingdao, Shandong 266101 (CN); Haier Smart Home Co., Ltd., Qingdao, Shandong 266101 (CN)
(72) Inventor: ZHANG, Ning, Qingdao, Shandong 266101 (CN); KONG, Linglei, Qingdao, Shandong 266101 (CN); LI, Guixi, Qingdao, Shandong 266101 (CN)
(74) Representative: Gille Hrabal Partnerschaftsgesellschaft mbB Patentanwälte
(86) International application number: PCT/CN2021/127042
(87) International publication number: WO 2022/089536

(56) References cited:
- CN-A- 102 476 509
- CN-A- 103 148 666
- CN-A- 108 036 563
- CN-A- 111 513 579
- CN-B- 104 238 989
- CN-U- 212 512 065
- US-A1- 2010 104 680
- US-A1- 2019 348 044

## Description

### TECHNICAL FIELD

The application relates to refrigerating apparatuses, specifically a method and system for printing food material information, and a computer-readable storage medium.

### BACKGROUND

In family life, a refrigerator is an essential household appliance. However, users often find it challenging to manage food materials stored inside the refrigerator. Different food materials cannot be easily distinguished, which can lead to mixing up pork and beef, for instance, thereby affecting cooking. Additionally, it can be challenging to differentiate food materials based on their putting times. Handwriting information and labeling food materials is complex, time-consuming, and inconvenient, especially when managing a large quantity of food materials. This reduces the user's experience and cannot meet the user's demand for a smart home.

CN111513579A discloses a cooking machine for collecting user's dining habits and an application method thereof. The cooking machine includes a cooking machine body, and the cooking machine body includes: a food freezing part, which is used for freezing and storing food and labeling the food and records; the cooking part, which is used to cook food, and records the way the user cooks each time; the smoking part arranged above the cooking part, which is used to absorb the cooking fumes generated by the cooking part; the control circuit part, the control circuit The parts are respectively wired or wirelessly connected with the food freezing part, the cooking part and the smoking part. The control circuit part is used to control the food freezing part, the cooking part and the smoking part to start and collect and store information. Store and record the user's cooking habit information collected by the , cooking department and smoking department, and use the recorded information to formulate a menu suitable for the user and a cooking operation tutorial for the corresponding menu.

CN108036563A discloses an interactive intelligent refrigerator system, comprising: a box body, a weight collection module, a voice recognition module, a scanning module, a processing module, a display module and a wireless transceiver module; the weight collection module, the voice recognition module, the scanning module, processing module, display module and wireless transceiver module are respectively arranged on the said box body; the weight collection module is used to collect the weight information of the ingredients; the voice recognition module is used to collect the voice information; the scanning module is used to collect the basic information of the ingredients information; the processing module is used to receive and process and collect the weight information of the ingredients, the voice information and the basic information of the ingredients to obtain processing information; the wireless transceiver module is used to receive the processing information and send wireless information . The present invention is an interactive intelligent refrigerator system, and provides an intelligent refrigerator system for quickly and effectively inputting food material information and realizing management of food material in time.

CN103148666A discloses a refrigerator, comprising: a box body, the box body has a cooling space; a door body, the door body is connected with the box body to open and close the cooling space; an alarm device is arranged on the door body or the box body; and a bar code Scanner, the barcode scanner is set on the door body or the box body, to scan the barcode on the item before the item is put into the refrigeration compartment, and activate the alarm at a predetermined time according to the information on the obtained barcode. According to the refrigerator of the present invention, the refrigerator can at least control the freshness period of the items with packaging barcodes placed in the refrigeration room, and perform early warning according to the freshness time of different foods, and notify the user.

US20100104680A1 discloses a food processor with phonetic recognition ability is disclosed, which comprises: a phonetic recognition module and a food processing module. The phonetic recognition module is capable of receiving sound signals so as to identify a content of characters containing in the received sound signals. US2019348044A1 discloses a refrigerator comprises a storage compartment configured to store food, a temperature detector configured to detect an internal temperature of the storage compartment, a cooler configured to supply cool air to the storage compartment, a microphone configured to receive a speech, a display configured to display information, at least one processor configured to be electrically connected to the temperature detector, the microphone, and the display; and a memory configured to be electrically connected to the at least one processor. The memory stores at least one instructions configured to, when a first speech including a food name is recognized via the microphone, allow the processor to display a food list, which comprises food information corresponding to the food name and an identification mark identifying the food information, on the display, and configured to, when a second speech referring to the identification mark is recognized via the microphone, allow the processor to display food purchase information corresponding to the identification mark, on the display. CN104238989B discloses a method for using Chinese voice to control an intelligent refrigerator and belongs to the technical field of intelligent household electrical appliances. The technical scheme is that voice signals are firstly identified into corresponding characters through a Chinese voice identification module, the characters are bound with particular program of computer, the computer executes the particular program, and the computer executing the particular program controls execution modules for completing various actions of the refrigerator and control actions of various refrigerators. By means of the technical scheme, people can conveniently control refrigeration of the refrigerator and food freezing through Chinese voice control. The food processing module is capable of producing food products containing characters corresponding to the phonetic recognition result of the phonetic recognition module.

### SUMMARY

To solve the aforementioned problems, it is provided a food material information printing method and system, along with a computer-readable storage medium according to the independent claims. Preferred embodiments are described in the dependent claims.

Compared with the prior art, the present invention has the following beneficial effects: when required to mark the information of a food material, a user speaks the information required to be marked by means of voice input, the printing information of the label is generated according to voice content of the user, the label is then printed according to the printing information, and the user pastes the label on a surface of the food material, such that the food material can be managed conveniently, user experience is greatly improved, and demands for a smart home are met.

### BRIEF DESCRIPTION OF THE DRAWINGS

FIG. 1 is a flow chart of a food material information printing method according to an embodiment of the present invention;
FIG. 2 is a flow chart of acquisition of food material information and corresponding quantity information in an embodiment of the present invention;
FIG. 3 is a schematic diagram of a control module in an embodiment of the present invention;
FIG. 4 is a schematic diagram of a control module in another embodiment of the present invention; and
FIG. 5 is a schematic diagram of a printed label in the present invention.

In the drawings, 1. refrigerator; 2. printing apparatus; 11. pickup module; 12. wireless connection module; 13. processing module; 14. remote server; 15. network module; 16. memory; 17. communication bus.

### DETAILED DESCRIPTION

Hereinafter, the present invention will be described in detail in conjunction with specific embodiments shown in the accompanying drawings.

An embodiment of the present invention provides a food material information printing method and system as well as a readable storage medium, and the method is applied to the system, such that a printing apparatus can automatically print labels including food material information after a user speaks to-be-printed content, the user pastes the labels to food materials, the operation is convenient, and the user can conveniently and rapidly distinguish the food materials in future use, thus improving use experiences of the user.

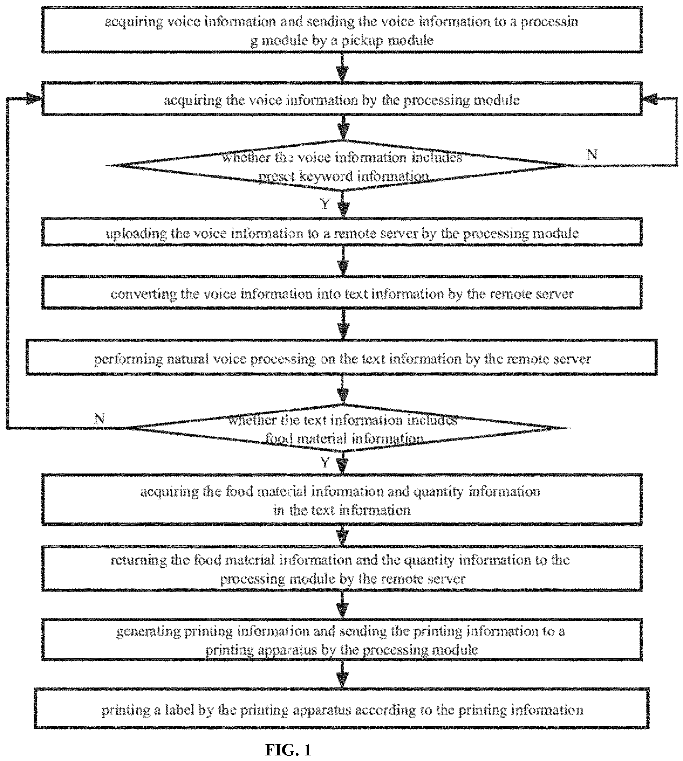

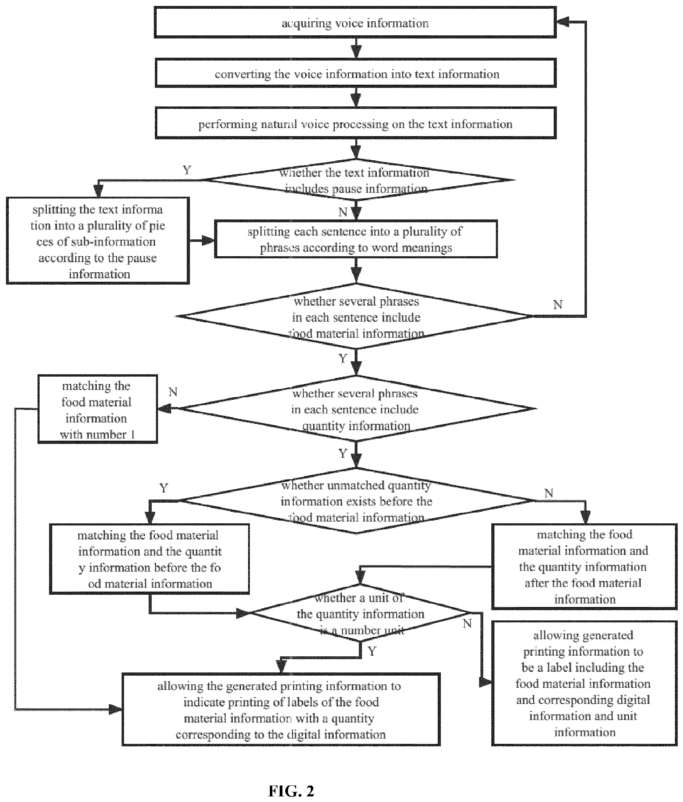

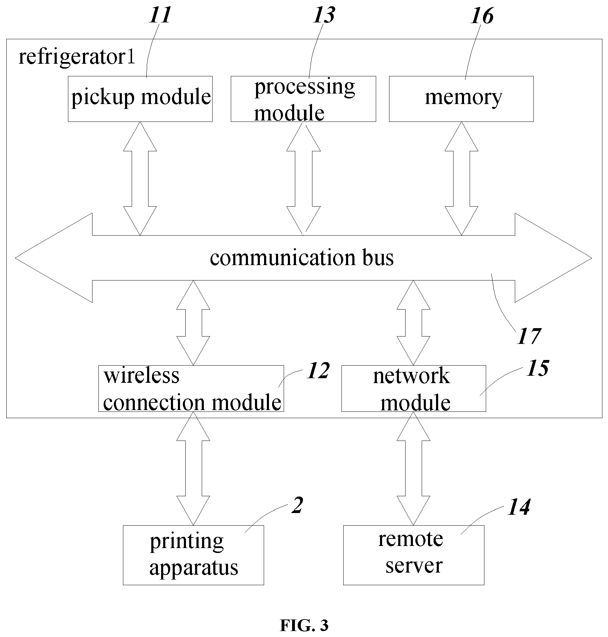

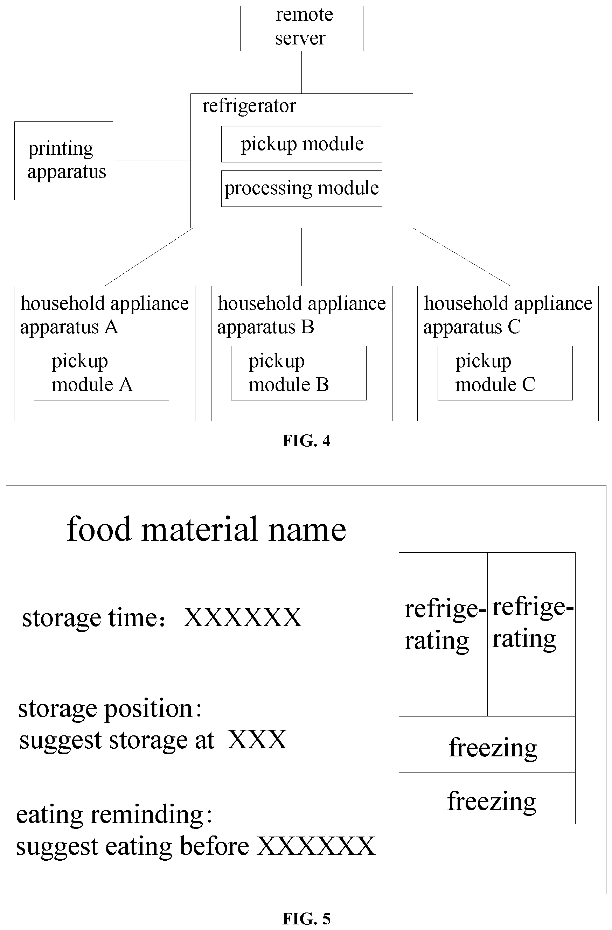

The food material information printing method is shown in FIGS. 1 and 2, the food material information printing system is shown in FIGS. 3 and 4, and the finally printed label is shown in FIG. 5.

An embodiment of the present invention provides a food material information printing system, including:
a household appliance apparatus which may be configured as one apparatus, as shown in FIG. 3, or plural apparatuses, as shown in FIG. 4; wherein when the household appliance apparatus is configured as one apparatus, the household appliance apparatus may be configured as a refrigerator 1 for storing food materials, and when the household appliance apparatus is configured as plural apparatuses, the plural apparatuses can work cooperatively, and a specific working mode is developed hereinafter; the following description is given in detail mainly with one apparatus as the refrigerator 1;
a pickup module 11 for acquiring voice information, wherein the household appliance apparatus includes the pickup module 11, the pickup module 11 can be mounted in a door of the refrigerator 1 when the household appliance apparatus is configured as the refrigerator 1, a microphone hole of the pickup module 11 faces an outer side of a door panel of the refrigerator 1, the pickup module 11 can also be mounted in a vertical beam of the refrigerator 1, and the microphone hole of the pickup module 11 faces an outer side of the vertical beam and is configured to acquire the external voice information;
a printing module which may be configured as an independent printing apparatus 2, and more specifically, may be configured as an independent label printer, and is specially configured to print label information, wherein the printing apparatus 2 finishes printing of a label after acquiring printing information, and content of the printed label includes food material information;
a connection module which is specifically configured as a wireless connection module 12, and configured to connect the refrigerator 1 and the printing module by means of Bluetooth, a UWB, or the like;
a memory 16 for storing a computer program; and
a processing module 13 for implementing the steps in the food material information printing method when executing the computer program.

Further, the processing module 13 may be configured as a processing unit provided in the household appliance apparatus, or a remote server 13 in communication connection with the household appliance apparatus.

In the food material information printing system, generation of the printing information can be independently completed by the refrigerator 1 or by connecting the refrigerator 1 with a remote server 14; that is, the food material information printing system further includes the remote server 14 and a network module 15, the processing module 13 of the refrigerator 1 is connected with the remote server 14 through the network module 15, that is, connected to cloud, a requirement for a computing power of the refrigerator 1 is reduced, and data processing work is completed at the cloud.

The present application discloses a food material information printing method according to an embodiment, and although the present application provides method operation steps described in the following embodiment or flow charts 1 and 2, the method has no necessary causal relationship in the steps logically based on the conventional or non-creative labor, and an execution order of the steps is not limited to the execution order provided in the embodiment of the present application.

Specifically, the food material information printing method includes the following steps:
performing semantic recognition on acquired voice information;
wherein the acquired voice information is a voice instruction sent by the user, and the voice information is received by a microphone and then transmitted to the processing module 13 and/or the remote server 14;
converting the voice information into text information, wherein the conversion mode can be extraction of the text information in a voice by an ASR module; and performing natural voice processing on the text information, wherein an NLP module is adopted in the step, a refrigerator semantic recognition model is matched according to keywords, such as a printed food material name, or the like, understood text information content is judged, whether the text information contains food material information is judged, and specifically, the food material information in the text information is matched according to a cloud big data food material library, and when the text information contains the food material information, the food material information in the text information can be obtained;
acquiring the food material information in the text information of the semantic recognition result;
applying the food material information to preset template information to generate printing information; and
sending the printing information to the printing module.

The preset template information is a label drawing including the food material information.

The above method steps can be all done locally, that is, between the refrigerator 1 and the printing apparatus 2; for example, the processing module 13 of the refrigerator 1 completes the conversion from the voice information to the text information, and completes the natural voice processing of the text information and the generation of the final printing information. Similarly, one part of the work can be completed locally, the other part of the work can be completed at the remote server at the cloud, and at this point, the food material information printing system includes the local apparatus and the cloud, or simultaneously includes the processing module 13 and the remote server 14, the printing apparatus 2 serves as one end of the system and is responsible for printing, and a data processing part serves as the other end of the system and includes the processing module 13 and the remote server 14. The method includes the following steps:
sending the voice information to the remote server; and
receiving the food material information in the semantic recognition result obtained after the remote server performs semantic recognition.

More specifically, the method includes the following steps:
acquiring the voice information by the processing module 13;
uploading the voice information to the remote server 14 by the processing module 13;
acquiring, by the processing module 13, a processing result containing the food material information returned from the remote server 14;
filling, by the processing module 13, the preset template information with the processing result, so as to generate the printing information; and
sending the printing information to the printing module by the processing module 13.

At this point, the following operations are completed on the remote server 14:
converting the voice information into the text information by the remote server 14;
performing the natural voice processing on the text information by the remote server 14;
judging, by the remote server 14, whether the text information contains the food material information, and when the text information contains the food material information, acquiring the food material information in the text information; and
sending the printing information to the processing module 13 by the remote server 14.

Similarly, the local processing module 13 may also be only responsible for data transmission and distribution, but not responsible for data processing, all data processing steps are completed by the cloud, and the method specifically includes the following steps:
converting the voice information into the text information by the remote server 14;
the remote server 14 performs the natural voice processing on the text information;
judging, by the remote server 14, whether the text information contains the food material information, and when the text information contains the food material information, acquiring the food material information in the text information and quantity information corresponding to the food material information;
acquiring the preset template information by the remote server 14;
generating the printing information by the remote server 14 according to the food material information and the preset template information; and
sending the printing information to the printing module by the remote server 14.

The following description is given in detail in an example where the remote server 14 processes the conversion from the voice information to the food material information, and the processing module 13 generates the printing information according to the food material information and the preset template information.

The step of applying the food material information to preset template information to generate printing information includes:
when plural pieces of food material information exist, splitting the plural pieces of food material information into plural pieces of independent food material sub-information according to word meanings; and
applying each piece of food material sub-information to the preset template information to generate printing information of each piece of food material sub-information.

The splitting of the food material sub-information occurs when the user speaks a plurality of pieces of printed food material information at the same time; for example, when the voice made by the user is "da yin niu rou fan qie", keywords of the food material information are matched in a dictionary of a food material library, and the food material information semantically identified at this point includes "niu rou" and "fan qie"; that is, "niu rou" and "fan qie" serve as two pieces of independent food material sub-information, and at this point, two pieces of printing information exist; that is, a label for "niu rou" and a label for "fan qie" are printed.

The step of acquiring the food material information in the text information of the semantic recognition result includes:
when the text information includes a pause identifier, splitting the text information into a plurality of pieces of sub-information according to the pause identifier;
dividing the text information without the pause identifier or any sub-information into a plurality of phrases according to word meanings, each phrase at most including one piece of food material information;
acquiring adjacent quantity information before or after the food material information, no food material information or quantity information existing between the food material information and the adjacent quantity information; and
matching the food material information and the adjacent quantity information in a corresponding relationship.

When the user speaks a speech section, the speech section often includes some pause indicators. For example, when the user says "da yin liang ge niu rou, san ge fan qie," there is a pause between "niu rou" and "san ge." When the voice information is converted into text information, the pause can be marked with a comma or space. That is, there is a pause indicator, and the text information is split into sub-information based on the pause.

No food material information or quantity information exists between the food material information and the adjacent quantity information. This means that the food material information is only analyzed in relation to the adjacent quantity information. The word "adjacent" means that the quantity information can appear before or after the food material information, but there is no quantity or food material information in between.

When the user says "da yin liang ge niu rou, san ge fan qie," "niu rou" and "fan qie" can be matched in the dictionary as independent phrases. The phrases corresponding to "liang ge" can be "liang ge" or "liange" and "ge." That is, the quantity and food material are mainly split during phrase splitting. When the information is split into phrases, the first sub-information is "da yin," "liang ge," and "niu rou," and the second sub-information is "san ge" and "fan qie." When the user does not pause between "niu rou" and "san ge," the phrases are "da yin," "liang ge," "niu rou," "san ge," and "fan qie." A corresponding relationship is established between "liang ge" and "niu rou," and a corresponding relationship is established between "san ge" and "fan qie."

More specifically, the step of matching the food material information and the adjacent quantity information in a corresponding relationship further includes:

When there is unmatched quantity information before the food material information, matching the food material information and the quantity information before the food material information.

When there is no unmatched quantity information before the food material information, but quantity information exists after the food material information, matching the food material information and the quantity information after the food material information.

When there is no unmatched quantity information before or after the food material information, matching the food material information with the number 1.

Using the example of "da yin liang ge niu rou, san ge fan qie," when the user pauses between "niu rou" and "san ge," the pause indicator is split first. This speech section is changed into two sub-information pieces. When there is no pause, splitting is not performed. When splitting is performed, the two sub-information pieces are independently analyzed. That is, the corresponding relationship is established between "liang ge" and "niu rou," and the corresponding relationship is established between "san ge" and "fan qie" in the second sub-information. When splitting is not performed, quantifiers exist before and after "niu rou," and the corresponding relationship is established between "liang ge" before "niu rou" and "niu rou." Since "san ge" after "niu rou" is not matched with the word before "san ge," "san ge" is matched with "fan qie" after "san ge."

The user might say "da yin niu rou liang ge san ge fan qie". At this point, there is no quantity information before "niu rou". "Liang ge" exists after "niu rou" and is matched with "niu rou", while "san ge" is matched with "fan qie".

Alternatively, the user might say "da yin niu rou he fan qie". Since no quantity information exists, the quantity information is matched with the default number 1. This means that one label is printed for "niu rou" and one label is printed for "fan qie".

The step of generating the printing information according to the quantity information, the food material information, and the preset template information includes:
Allowing the quantity information to include both digital information and unit information.

When the unit information is a number unit, the generated printing information indicates the printing of labels of the food material information with a quantity corresponding to the digital information.

When the user says "da yin liang ge niu rou, san ge fan qie" or "da yin liang zhang niu rou, san zhang fan qie", "liang ge" is one piece of quantity information. "Liang" is digital information, while "ge" or "zhang" is unit information. At this point, two labels with the food material information of "niu rou" are printed, and three labels with the food material information of "fan qie" are printed.

When the unit information is not a number unit, the generated printing information is a label that includes both the food material information and the corresponding digital information and unit information.

When the user says "da yin liang jin niu rou, san jin fan qie," the system determines that the unit information is not related to numerical information. Therefore, it prints label information incorporating the weight of the food materials for "liang jin niu rou" and "sanjin fan qie." The system distinguishes label number information from other label information containing numbers and matches unit recognition with the dictionary. For instance, in "da yin liang ge niu rou, san jin fan qie," the unit of the quantity information corresponding to "niu rou" is a label number when matched with the dictionary, while the unit matched with "fan qie" is not a number unit, and the quantity is only printed in character form. Consequently, the system incorporates the judgment of the quantity information in the voice information during the generation of the printing information.

Some content and formats on the preset template information are pre-designed, and other content, such as food material types and quantity information, are filled at specified positions according to the template. Therefore, the system generates a to-be-input item matched with the preset template information based on the quantity information and the food material information. The to-be-input item is then matched with the preset template information to generate the printing information.

The method includes the following steps:

### Acquiring the identity information of refrigerator 1

Obtaining proper food material placement position information and/or shelf life information based on the identity information and the food material information.

Determining weight information or the number of printed labels based on the quantity information.

Generating the to-be-input item matched with the preset template information, which includes at least one of food material information, proper placement position information, storage time information, shelf life information, and weight information. The system then fills in the position information of the information in the preset template information.

The refrigerator 1 identity information indicates a model of the refrigerator 1, which can be a model number or an MAC address. The system inquires about the model information of the refrigerator 1 while the food material label is printed, and a storage position can be suggested based on the model. Since a storage time may be determined, the temperature at the storage position and the food material information can be used to suggest a reasonable shelf life for the food material. The weight information can be presented in the quantity information, or the user can speak the weight separately. The content of the printed label can include the above information so that the user can more conveniently place the printed label at a proper position to store and manage the information. The user can conveniently inquire about the type and position of the food material in real-time, and a historical storage record can be accessed.

By determining the proper food material placement position information and/or shelf life information, more accurate analysis can be performed for food material management. By connecting the remote server 14 and a mobile phone of the user, the user can inquire and manage the storage situation of the refrigerator 1 through APP or an applet. The user can also select the label printing template and perform operations such as adjusting storage parameters, connection and disconnection between the refrigerator 1 and the printing apparatus 2, or other functions on the APP or applet.

The processing module 13 continuously acquires voice information;
the processing module 13 judges whether the information includes preset keywords. When a keyword is detected, the processing module uploads the voice information to the remote server 14. The preset keyword can be two printed characters or a specified password. Only when the password is detected, printing work is started. This design allows the processing module 13 to operate with lower power consumption and avoids continuous judgment and identification of meaningless voice information.

Additionally, the wireless connection module 12 can be pre-connected with the refrigerator 1 and the printing apparatus 2. A matching relationship is established between them, and after printing is determined to be required, the wireless connection module 12 can be turned on or Bluetooth can be turned on to connect the refrigerator 1 and the printing apparatus 2. After printing is finished, the wireless connection module 12 can be turned off or Bluetooth can be turned off. The user pastes the printed label on the surface of the food material.

The food material information printing system can further include a communication bus 17, which establishes a connection among the pickup module 11, the processing module 13, the memory 16, the wireless connection module 12, and the network module 15. The communication bus 17 can transmit information among these modules.

The network module 15 uses any transceiver or similar device to communicate with other apparatuses or communication networks, such as Ethernet, radio access network (RAN), wireless local area network (WLAN), ZIGBEE, or others. The memory 16 is connected with the processing module 13 by the communication bus 17 and can also be integrated with it. The processing module 13 can be a general central processing unit (CPU), a microprocessor module, an application-specific integrated circuit (ASIC), or one or more integrated circuits for controlling the execution of programs in the present invention.

In this embodiment, the intelligent household appliance can be configured as the refrigerator 1. The pickup module 11, the processing module 13, the memory 16, the wireless connection module 12, and the network module 15 are all integrated on the refrigerator 1. The refrigerator 1 acquires collected audio information through the pickup module 11, and the processing module 13 can process the audio information using the steps of the food material information printing method, or it can only be responsible for transmitting data to the remote server 14 for processing.

Furthermore, the present invention provides a computer-readable storage medium that stores a computer program. When executed by the processing module 13, the program can implement any step in the food material information printing method or any technical solution in it.

The above operation can be completed through cooperation of a plurality of household appliance apparatuses; for example, pickup modules 11 are included on apparatuses, such as a television, a mobile phone, an air conditioner, a voice assistant, the refrigerator 1, or the like, and after the user sends out a voice instruction, the voice instruction is received by the plurality of apparatuses at the same time, such that the clearest voice information can be selected, or the voice information received by the proper apparatus can be selected according to dimensions, such as a noise index, a definition degree, a volume, or the like.

Independent processing of the processing module 13 may be performed in each of these apparatuses, or the voice information may be collectively transmitted to the processing module 13 of the refrigerator 1 for processing, these apparatuses may be connected to the printing apparatus 2 by the wireless connection module 12, or may be connected by the refrigerator 1, and the other apparatuses are only configured to acquire the voice information.

In the foregoing specification, it should be understood that the disclosed system and method may be implemented in other manners. For example, the above-described system embodiment is only exemplary. For example, the apparatus module division is only logical function division and may be other division in actual implementation. For example, a plurality of modules or components may be combined or integrated into another system, or some features may be ignored or not performed. In addition, the displayed or discussed mutual coupling or direct coupling or communication connection may be implemented through some interfaces. The indirect coupling or communication connection between the systems or modules may be implemented in electronic, mechanical or other forms.

For example, the processing modules 13 in the present application may be integrated into one processing module, or each of the modules may exist alone physically, or two or more modules are integrated into one module. The above integrated module may be implemented in a hardware form or a form of hardware and software functional modules. The voice information received by the voice modules of plural household appliance apparatuses may be sent to the same processing module, or may be sent to respective processing modules, and the respective processing modules are collectively referred to as the processing module 13.

The integrated module implemented in the software functional module form may be stored in a computer-readable storage medium. The software functional module is stored in a storage medium and includes several instructions for causing a computer system (which may be a personal computer, a remote server, a network system, or the like) or a processor to execute some steps of the method according to the embodiments of the present application. The foregoing storage medium includes: any medium which may store program codes, such as a universal serial bus (USB) flash disk, a removable hard disk, a read-only memory (ROM) 16, a random access memory (RAM) 16, a magnetic disk, or an optical disk.

Compared with the prior art, the present embodiment has the following beneficial effects:
when required to mark the information of the food material, the user speaks the information required to be marked by means of voice input, the printing information of the label is generated according to voice content of the user, the label is then printed according to the printing information, and the user pastes the label on the surface of the food material, such that the food material can be managed conveniently, use experiences are improved greatly, and demands for a smart home are met.

By means of label pasting, after the food materials are placed in the refrigerator 1, the user can be more visually informed of the specific storage time of each food material, and in an extended sense, a suggested storage position can be printed on the label, the user can be quite visually informed of the storage positions of the food materials according to an existing food material condition when the food materials are stored, and the printed paper label can enable the user to get rid of a mobile phone and a display and show food material storage and taking conditions more visually.

It should be understood that although the present specification is described based on embodiments, not every embodiment contains only one independent technical solution. Such a narration way of the present specification is only for the sake of clarity. Those skilled in the art should take the present specification as an entirety.

## Claims

1. A food material information printing method comprising the steps of:
- performing, by a remote server, semantic recognition on voice information acquired by a pickup module (11) of a refrigerator (1) to obtain text information as a result of the performed semantic recognition;
- judging, by the remote server (14) connected to the refrigerator (1) through a network module (15), whether the text information contains food material information, and when the text information contains the food material information, acquiring the food material information in the text information of the semantic recognition result and acquiring quantity information corresponding to the food material information, the quantity information includes both numerical information and unit information;
wherein the step of acquiring the food material information in text information of the semantic recognition result comprises:
when the text information comprises a pause identifier, splitting the text information into a plurality of pieces of sub-information according to the pause identifier; dividing the text information without the pause identifier or any sub-information into a plurality of phrases according to word meanings, each phrase at most comprising one piece of food material information; acquiring adjacent quantity information before or after the food material information, no food material information or quantity information existing between the food material information and the adjacent quantity information; and
matching the food material information and the adjacent quantity information in a corresponding relationship;
- applying the food material information to preset template information to generate printing information; and
- sending the printing information to a printing module by the remote server ;
wherein the step of matching the food material information and the adjacent quantity information in a corresponding relationship comprises:
when the unit information is a number unit, allowing the generated printing information to indicate printing of labels of the food material information with a quantity corresponding to the numerical information;
when the unit information is not a number unit, allowing the generated printing information to be a label comprising the food material information and the corresponding numerical information and unit information;
and
- printing the label by the printing module.

2. The food material information printing method according to claim 1, **characterized in that** the step of applying the food material information to preset template information to generate printing information comprises:
when plural pieces of food material information exist, splitting the plural pieces of food material information into plural pieces of independent food material sub-information according to word meanings; and
applying each piece of food material sub-information to the preset template information to generate printing information of each piece of food material sub-information.

3. The food material information printing method according to claim 1, **characterized in that** the step of matching the food material information and the adjacent quantity information in a corresponding relationship further comprises:
when unmatched quantity information exists before the food material information, matching the food material information and the quantity information before the food material information;
when no unmatched quantity information exists before the food material information and quantity information exists after the food material information, matching the food material information and the quantity information after the food material information;
and
when no unmatched quantity information exists before and after the food material information, matching the food material information with number 1.

4. The food material information printing method according to claim 1, **characterized in that** the step of applying the food material information to preset template information to generate printing information comprises:
acquiring refrigerator identity information;
according to the refrigerator identity information and the food material information, acquiring proper food material placement position information and/or shelf life information; and
generating a to-be-input item matched with the preset template information, the to-be-input item comprising at least one of food material information, proper placement position information, storage time information, shelf life information and weight information, and filling position information of the information in the preset template information.

5. The food material information printing method according to claim 1, **characterized in that** the step of performing semantic recognition on acquired voice information, and acquiring food material information in the semantic recognition result comprises:
sending the voice information to a remote server (14); and
receiving the food material information in the semantic recognition result obtained after the remote server (14) performs semantic recognition.

6. A food material information printing system, comprising:
a refrigerator (1);
a pickup module (11) of the refrigerator (1) configured to acquire voice information;
a printing module configured to print a label containing food material information;
a connection module configured to connect the refrigerator (1) and the printing module;
a memory (16) of the refrigerator (1) configured to store a computer program; and
a remote server configured to implement the steps in the food material information printing method according to claim 1 when executing the computer program.

7. The food material information printing system according to claim 6, **characterized in that** the remote server is configured as a processing unit provided in the household appliance apparatus, or a remote server in communication connection with the household appliance apparatus.

8. A readable storage medium, which stores a computer program, **characterized in that** the computer program instructs the carrying out of the steps in the food material information printing method according to claim 1 when executed by a remote server.

## Patentansprüche

1. Ein Verfahren zum Drucken von Lebensmittelinformationen, umfassend die folgenden Schritte:
- Durchführen, durch einen Remote-Server, einer semantischen Erkennung an Sprachinformationen, die von einem Aufnahmemodul (11) eines Kühlschranks (1) erfasst wurden, um Textinformationen als Ergebnis der durchgeführten semantischen Erkennung zu erhalten;
- Beurteilen, durch den Remote-Server (14), der über ein Netzwerkmodul (15) mit dem Kühlschrank (1) verbunden ist, ob die Textinformationen Lebensmittelinformationen enthalten, und wenn die Textinformationen die Lebensmittelinformationen enthalten, Erfassen der Lebensmittelinformationen in den Textinformationen des Ergebnisses der semantischen Erkennung und Erfassen von Mengeninformationen, die den Lebensmittelinformationen entsprechen, wobei die Mengeninformationen sowohl numerische Informationen als auch Einheiteninformationen enthalten;
wobei der Schritt des Erfassens der Lebensmittelinformationen in den Textinformationen des semantischen Ergebnisses der semantischen Erkennung umfasst:
wenn die Textinformationen eine Pausenmarkierung enthalten, Aufteilen der Textinformationen in eine Vielzahl von Sub-Informationsteilen gemäß der Pausenmarkierung; Aufteilen der Textinformationen ohne die Pausenmarkierung oder Sub-Informationen in eine Vielzahl von Phrasen gemäß Wortbedeutungen, wobei jede Phrase höchstens eine Lebensmittelinformation umfasst; Erfassen benachbarter Mengeninformationen vor oder nach der Lebensmittelinformation, wobei zwischen den Lebensmittelinformationen und den benachbarten Mengeninformationen keine Lebensmittelinformationen oder Mengeninformationen vorhanden sind; und
Abgleichen der Lebensmittelinformationen und der benachbarten Mengeninformationen in einer entsprechenden Beziehung;
- Anwenden der Lebensmittelinformationen auf voreingestellte Vorlageninformationen, um Druckinformationen zu erzeugen; und
- Senden der Druckinformationen an ein Druckmodul durch den Remote-Server; wobei der Schritt des Abgleichens der Lebensmittelinformationen und der benachbarten Mengeninformationen in einer entsprechenden Beziehung umfasst:
wenn die Einheiteninformation eine Anzahl-Einheit ist, Ermöglichen, dass die erzeugten Druckinformationen das Drucken von Etiketten der Lebensmittelinformationen mit einer Menge anzeigen, die der numerischen Information entspricht;
wenn die Einheiteninformation keine Anzahl-Einheit ist, Ermöglichen, dass die erzeugten Druckinformationen ein Etikett sind, das die Lebensmittelinformationen und die entsprechenden numerische Informationen und Einheiteninformationen umfasst;
und
Drucken des Etiketts durch das Druckmodul.

2. Das Verfahren zum Drucken von Lebensmittelinformationen gemäß Anspruch 1, **dadurch gekennzeichnet, dass** der Schritt des Anwendens der Lebensmittelinformationen auf voreingestellte Vorlageninformationen zum Erzeugen von Druckinformationen umfasst:
wenn mehrere Lebensmittelinformationen vorhanden sind, Aufteilen der mehreren Lebensmittelinformationen in mehrere unabhängige Lebensmittel-Sub-Informationen gemäß Wortbedeutungen; und
Anwenden jeder Lebensmittel-Sub-Information auf die voreingestellte Vorlageninformation, um Druckinformationen jeder Lebensmittel-Sub-Information zu erzeugen.

3. Das Verfahren zum Drucken von Lebensmittelinformationen gemäß Anspruch 1, **dadurch gekennzeichnet, dass** der Schritt des Abgleichens der Lebensmittelinformationen und der benachbarten Mengeninformationen in einer entsprechenden Beziehung ferner umfasst:
wenn nicht abgeglichene Mengeninformationen vor den Lebensmittelinformationen vorhanden sind, Abgleichen der Lebensmittelinformationen und der Mengeninformationen vor den Lebensmittelinformationen;
wenn keine nicht abgeglichenen Mengeninformationen vor den Lebensmittelinformationen vorhanden sind und Mengeninformationen nach den Lebensmittelinformationen vorhanden sind, Abgleichen der Lebensmittelinformationen und der Mengeninformationen nach den Lebensmittelinformationen;
und
wenn keine nicht abgeglichenen Mengeninformationen vor und nach den Lebensmittelinformationen vorhanden sind, Abgleichen der Lebensmittelinformationen mit der Anzahl 1.

4. Das Verfahren zum Drucken von Lebensmittelinformationen gemäß Anspruch 1, **dadurch gekennzeichnet, dass** der Schritt des Anwendens der Lebensmittelinformationen auf voreingestellte Vorlageninformationen zum Erzeugen von Druckinformationen umfasst:
Erfassen von Kühlschrankidentitätsinformationen;
Erfassen von Informationen über die richtige Platzierung von Lebensmitteln und/oder Informationen über die Haltbarkeit gemäß Informationen zur Identität des Kühlschranks und den Lebensmittelinformationen; und
Erzeugen eines einzugebenden Elements, das mit den voreingestellten Vorlageninformationen abgeglichen ist, wobei das einzugebende Element mindestens eines umfasst aus: Lebensmittelinformationen, Informationen über die richtige Platzierung, Informationen über die Lagerzeit, Informationen über die Haltbarkeit und Informationen über das Gewicht und Ausfüllpositionsinformationen der Information in den voreingestellten Vorlageninformationen.

5. Das Verfahren zum Drucken von Lebensmittelinformationen gemäß Anspruch 1, **dadurch gekennzeichnet, dass** der Schritt des Durchführens einer semantischen Erkennung an erfassten Sprachinformationen und des Erfassens von Lebensmittelinformationen im Ergebnis der semantischen Erkennung umfasst:
Senden der Sprachinformationen an einen Remote-Server (14); und
Empfangen der Lebensmittelinformationen im Ergebnis der semantischen Erkennung, das erhalten wird, nachdem der Remote-Server (14) die semantische Erkennung durchführt.

6. Ein System zum Drucken von Lebensmittelinformationen, umfassend:
einen Kühlschrank (1);
ein Aufnahmemodul (11) des Kühlschranks (1), das dazu eingerichtet ist, Sprachinformationen zu erfassen;
ein Druckmodul, das dazu eingerichtet ist, ein Etikett mit Lebensmittelinformationen zu drucken;
ein Verbindungsmodul, das dazu eingerichtet ist, den Kühlschrank (1) und das Druckmodul zu verbinden;
einen Speicher (16) des Kühlschranks (1), der dazu eingerichtet ist, ein Computerprogramm zu speichern; und
einen Remote-Server, der dazu eingerichtet ist, die Schritte des Verfahrens zum Drucken von Lebensmittelinformationen gemäß Anspruch 1 beim Ausführen des Computerprogramms umzusetzen.

7. Das System zum Drucken von Lebensmittelinformationen gemäß Anspruch 6, **dadurch gekennzeichnet, dass** der Remote-Server als eine im Haushaltsgerät bereitgestellte Verarbeitungseinheit oder als ein mit dem Haushaltsgerät in Kommunikationsverbindung stehender Remote-Server konfiguriert ist.

8. Ein lesbares Speichermedium, das ein Computerprogramm speichert, **dadurch gekennzeichnet, dass** das Computerprogramm die Ausführung der Schritte des Verfahrens zum Drucken von Lebensmittelinformationen gemäß Anspruch 1 anweist, wenn es von einem Remote-Server ausgeführt wird.

## Revendications

1. Un procédé d'impression d'information de matière alimentaire comprenant les étapes de :
- effectuer, par un serveur distant, une reconnaissance sémantique sur de l'information vocale acquise par un module de captation (11) d'un réfrigérateur (1) pour obtenir de l'information de texte, comme un résultat de la reconnaissance sémantique effectuée ;
- juger, par le serveur distant (14) connecté au réfrigérateur (1) via un module réseau (15), si l'information de texte contient de l'information de matière alimentaire, et, lorsque l'information de texte contient de l'information de matière alimentaire, acquérir l'information de matière alimentaire dans l'information de texte du résultat de reconnaissance sémantique, et acquérir de l'information de quantité correspondant à l'information de matière alimentaire, l'information de quantité inclue à la fois de l'information numérique et de l'information d'unité;
dans lequel l'étape d'acquisition de l'information de matière alimentaire dans l'information de texte du résultat de reconnaissance sémantique comprend :
lorsque l'information de texte comprend un identifiant de pause, fractionner l'information de texte en une pluralité de morceaux de sous-information selon l'identifiant de pause ; diviser l'information de texte sans l'identifiant de pause ni aucune sous-information en une pluralité de phrases selon les significations de mot, chaque phrase comprenant au maximum un morceau d'information de matière alimentaire; acquérir de l'information de quantité adjacente avant ou après l'information de matière alimentaire, aucune information de matière alimentaire ou information de quantité existant entre l'information de matière alimentaire et l'information de quantité adjacente ; et faire correspondre l'information de matière alimentaire et l'information de quantité adjacente dans une relation correspondante ;
- appliquer l'information de matière alimentaire à de l'information de modèle prédéfinie pour générer de l'information d'impression ; et
- envoyer l'information d'impression à un module d'impression par le serveur distant ;
dans lequel l'étape de faire correspondre l'information de matière alimentaire et l'information de quantité adjacente dans une relation correspondante comprend :
lorsque l'information d'unité est une unité de nombre, permettre à l'information d'impression générée d'indiquer l'impression des étiquettes de l'information de matière alimentaire avec une quantité correspondant à l'information numérique ;
lorsque l'information d'unité n'est pas une unité de nombre, permettre à l'information d'impression générée d'être une étiquette comprenant l'information de matière alimentaire et l'information numérique et information d'unité correspondantes ;
et
- imprimer l'étiquette par le module d'impression.

2. Le procédé d'impression d'information de matière alimentaire selon la revendication 1,
**caractérisé en ce que** l'étape d'appliquer l'information de matière alimentaire à l'information de modèle prédéfinie pour générer de l'information d'impression comprend :
lorsque des morceaux pluriels d'information de matière alimentaire existent, fractionner les morceaux pluriels d'information de matière alimentaire en morceaux pluriels de sous-information de matière alimentaire indépendante selon les significations de mot ; et
appliquer chaque morceau de sous-information de matière alimentaire à l'information de modèle prédéfinie pour générer de l'information d'impression de chaque morceau de sous-information de matière alimentaire.

3. Le procédé d'impression d'information de matière alimentaire selon la revendication 1,
**caractérisé en ce que** l'étape de faire correspondre l'information de matière alimentaire et l'information de quantité adjacente dans une relation correspondante comprend en outre :
lorsque de l'information de quantité pas faite correspondre existe avant l'information de matière alimentaire, faire correspondre l'information de matière alimentaire et l'information de quantité avant l'information de matière alimentaire ;
lorsqu'aucune information de quantité pas faite correspondre n'existe avant l'information de matière alimentaire et de l'information de quantité existe après l'information de matière alimentaire, faire correspondre l'information de matière alimentaire et l'information de quantité après l'information de matière alimentaire ; et
lorsqu'aucune information de quantité pas faite correspondre n'existe avant ou après l'information de matière alimentaire, faire correspondre l'information de matière alimentaire au nombre 1.

4. Le procédé d'impression d'information de matière alimentaire selon la revendication 1,
**caractérisé en ce que** l'étape d'appliquer l'information de matière alimentaire à l'information de modèle prédéfinie pour générer de l'information d'impression comprend :
acquérir de l'information d'identité de réfrigérateur ;
selon l'information d'identité de réfrigérateur et l'information de matière alimentaire, acquérir de l'information de position de positionnement approprié de matière alimentaire et/ou de durée de conservation ; et
générer un élément à-être-entré fait correspondre à l'information de modèle prédéfinie, l'élément à-être-entré comprenant au moins un de l'information de matière alimentaire, de l'information de position de positionnement approprié, de l'information de temps de stockage, de l'information de durée de conservation et de l'information de poids, ainsi que de l'information de position de remplissage de l'information dans l'information de modèle prédéfinie.

5. Le procédé d'impression d'information de matière alimentaire selon la revendication 1,
**caractérisé en ce que** l'étape d'effectuer une reconnaissance sémantique sur de l'information vocale acquise, et d'acquérir de l'information de matière alimentaire dans le résultat de reconnaissance sémantique comprend :
envoyer l'information vocale à un serveur distant (14) ; et
recevoir l'information de matière alimentaire dans le résultat de reconnaissance sémantique obtenue après que le serveur distant (14) effectue une reconnaissance sémantique.

6. Un système d'impression d'information de matière alimentaire, comprenant :
un réfrigérateur (1) ;
un module de captation (11) du réfrigérateur (1) configuré pour acquérir de l'information vocale ;
un module d'impression configuré pour imprimer une étiquette contenant de l'information de matière alimentaire ;
un module de connexion configuré pour connecter le réfrigérateur (1) et le module d'impression ;
une mémoire (16) du réfrigérateur (1) configurée pour stocker un programme informatique ; et
un serveur distant configuré pour implémenter les étapes dans le procédé d'impression d'information de matière alimentaire selon la revendication 1, lorsqu'il exécute le programme informatique.

7. Le système d'impression d'information de matière alimentaire selon la revendication 6,
**caractérisé en ce que** le serveur distant est configuré comme une unité de traitement fournie dans l'appareil électroménager, ou comme un serveur distant en connexion de communication avec l'appareil électroménager.

8. Un support de stockage lisible, qui stocke un programme informatique, **caractérisé en ce que** le programme informatique instruit l'exécution des étapes dans le procédé d'impression d'information de matière alimentaire selon la revendication 1, lorsqu'il est exécuté par un serveur distant.
